# EUROPEAN PATENT APPLICATION

(11) **EP 1 696 354 A1**
(43) Date of publication of application: **30.08.2006**
(21) Application number: 06250917.9
(22) Date of filing: 21.02.2006
(51) Int. Cl.: G06F 17/30, H04L 12/28, H04L 12/56, H04L 29/06

(54) **Method, system and portable device for real-time provision of gallery guide and exhibit information**

(30) Priority: 23.02.2005 KR 2005014891
(71) Applicant: Samsung Electronics Co., Ltd., Suwon-si, Gyeonggi-Do (KR)
(72) Inventor: An, Soo-jin, Seocho-gu Seoul (KR)
(74) Representative: Robinson, Ian Michael

(57) **Abstract**

A method and apparatus are provided for real-time provision of guide information and exhibit information. The method includes storing guide information and work information, transmitting the stored tour and work information to a portable information providing device (100), sensing, by the portable information providing device (100), identification information of an exhibition room or a work on exhibition, outputting, by the portable information providing device (100), information of the work produced based on the identification information of the work, or guide information produced based on the identification information of the exhibition room or the work, recording a history relating to the works viewed or the tour time, and analyzing and storing the recorded history.

## Description

Systems, devices and methods consistent with the present invention relate to a gallery guide for viewing exhibits such as works of art, and more particularly, to provision of a gallery tour guide using a portable information providing device.

To view exhibits, products and works of art in exhibitions, museums, art galleries and the like, information regarding the works on exhibition is needed. In the related art, viewers have been guided by a guide, or descriptions or manuals on the works or articles on exhibition have been provided, which are usually mounted close to the concerned works or articles. However, when a large number of persons desire to view works or articles at the same time or individually in different ways, it is difficult to provide the related art method in a flexible manner.

In a voice guide system disclosed in Korean Unexamined Patent Publication No. 10-2003-67337, a server stores audio data for each exhibit, and transmits the audio data corresponding to an identification code of the exhibit transmitted from a user device, so that the user can be guided.

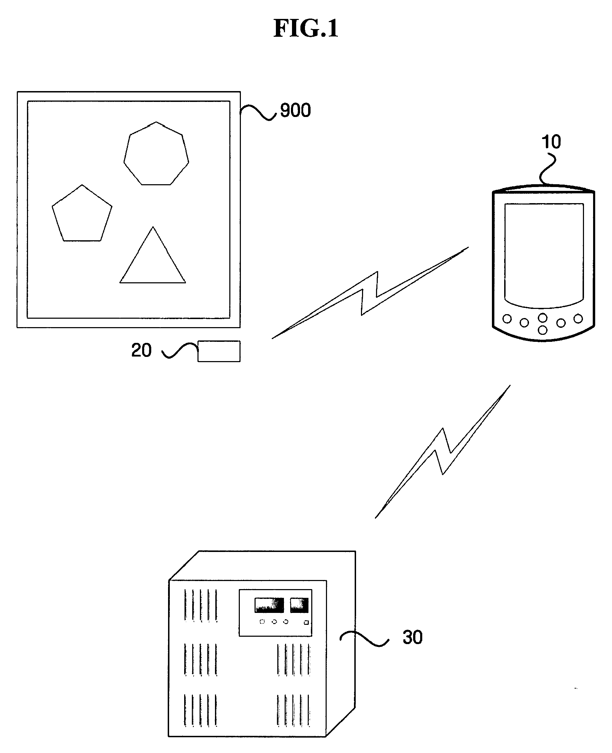

Figure 1 is a view outlining a related art voice guide system. A user device 10 is a portable device carried by a user that is moving. The user device 10 identifies a radio frequency identification (RFID) 20 of a work 900 on exhibition. Information on the work identified by the user device 10 is sent to a server 30, and the server 30 searches for audio data corresponding to the concerned work and sends it to the user device 10. The user may listen to the audio data through the user device 10 and obtain the information on the work. In the related art voice guide system, works are identified by barcodes and audio data describing the works is supplied to the user. This data is sent by the server, and thus, a delay may be generated when transmitting the data.

In addition to the information regarding works on exhibition, it is necessary to provide a viewer with information on a recommended sequence for viewing. For this, a method to recognize the viewer's current position is required. According to the related art, there are roughly three methods to recognize this position: handset-based position sensing, network-based position sensing, and a hybrid of the two.

Handset-based position sensing requires hardware or software upgrades since it acquires position information by means of a user's handset (cellular digital packet information phone). An example of the handset-based position sensing technology is an assisted global positioning system (A-GPS), in which a chip internally installed in a cell phone reads the position information sent from an artificial satellite and sends it to a base station, regardless of weather conditions.

Network-based position sensing does not require separate upgrading of the handset since the user's position information is acquired through numerical calculation by a neighboring base station. This technology includes a cell identifier (Cell-ID) and AOA/TOA/TDOA. The Cell-ID is the simplest position sensing technology, in which a user's position is identified through a service cell identifier (ID) of a base station to which the user belongs. An angle of arrival (AOA) determines the position information using the difference of signal receiving angles of three base stations that receive a signal from a handset. A time of arrival (TOA) determines the position information using a signal arrival time difference between a single service cell base station that receives a signal from a handset and two neighboring base stations. Like the TOA, a time difference of arrival (TDOA) determines the position information using a base-station/network-based technology and the signal arrival time differences between a single service cell station and two neighboring base stations.

However, these methods are available for use only when a connection to a base station is provided, like with a handset. This positioning method is targeted to a relatively wide space; for this reason, it is not appropriate for exhibition halls, art galleries, fairs and so on.

Accordingly, there is a demand for a method and a system to provide a gallery guide system in order to ascertain a user's current position when data transmission and reception is delayed, without relying upon the related art method that requires a handset.

According to the present invention there is provided an apparatus and method as set forth in the appended claims. Preferred features of the invention will be apparent from the dependent claims, and the description which follows.

The present invention provides work information and gallery guide information customized to each user in real time while the user is visiting an exhibition hall, a museum or an art gallery.

According to an aspect of the present invention, there is provided a method for real-time provision of guide information and exhibit information, the method comprising storing guide information and work information, transmitting the stored tour and work information to a portable information providing device, sensing, by the portable information providing device, identification information of an exhibition room or a work on exhibition, outputting, by the portable information providing device, information of the work produced based on the identification information of the work, or guide information produced based on the identification information of the exhibition room or the work, recording a history relating to the works viewed or the tour time, and analyzing and storing the recorded history.

According to an aspect of the present invention, there is provided a method for real-time provision of guide information and exhibit information, comprising receiving and storing work information and guide information, setting information on a user and the selected guide, sensing identification information of an exhibition room or a work, providing information on the sensed work, providing guide information relating to the current position produced by identification information on the sensed exhibition room or work, recording the history about the viewed work or the tour time, and transmitting the history.

According to an aspect of the present invention, there is provided a gallery guide system for real-time provision of guide and exhibit information, comprising an exhibition data server to store work information and guide information, a portable information providing device to sense identification information of an exhibition room or a work, output guide information produced by the sensed identification information of the exhibition room or the work, along with the current position, and an information storage device to store the information stored in the exhibition data server in the portable information providing device.

The above and other aspects of the present invention will become more apparent by describing in detail exemplary embodiments thereof with reference to the attached drawings in which:
Figure 1 is a view illustrating a related art voice guide system;
Figure 2 is a flow chart illustrating a guided tour starting from registration of a guide theme according to an exemplary embodiment of the present invention;
Figure 3 is a view illustrating a gallery guide system according to an exemplary embodiment of the present invention;
Figure 4 is a view illustrating specific elements of the gallery guide system according to an exemplary embodiment of the present invention;
Figure 5 is a flow chart illustrating a process of creating a guide theme according to an exemplary embodiment of the present invention;
Figure 6 is a flow chart illustrating a process of selecting a guide theme according to an exemplary embodiment of the present invention;
Figure 7 is a flow chart illustrating a process of viewing exhibits based on a guide theme according to an exemplary embodiment of the present invention; and
Figure 8 is a flow chart illustrating a process of storing and analyzing user information after completing the guided tour, according to an exemplary embodiment of the present invention.

Hereinbelow, exemplary embodiments of the present invention will be described in detail with reference to the accompanying drawings. Advantages and features of the present invention and methods of accomplishing the same may be understood more readily by referring to the following detailed description of exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims. Like reference numerals refer to like elements throughout the specification.

Throughout this specification, the term "guide information" refers to information provided in order to guide a user (i.e., a spectator) when the user tours exhibitions, museums, art galleries, fairs and the like. Accordingly, path information indicating the user's current position are included therein. The user may use the guide information downloaded from an external source, e. g., from a server, or the user can create guide information exclusive to the user's tour.

An exemplary embodiment of the present invention will be described in detail with reference to the accompanying drawings.

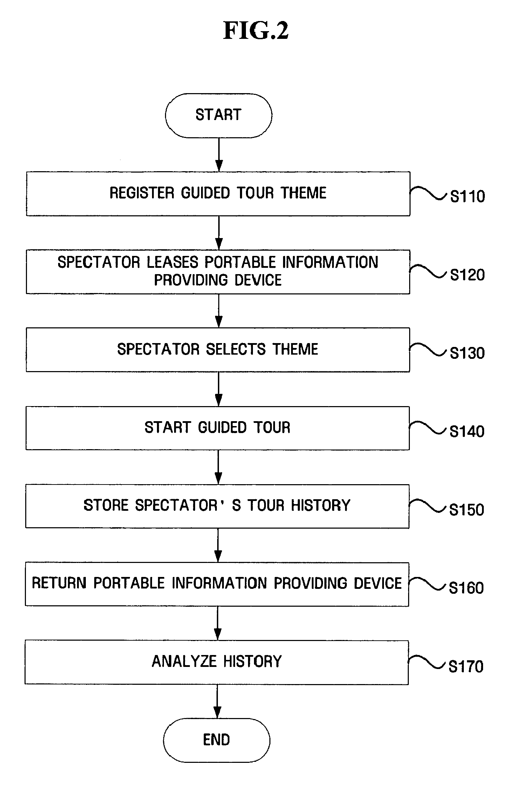

Figure 2 is a flow chart illustrating a guided tour starting from registration of a guide theme according to an exemplary embodiment of the present invention.

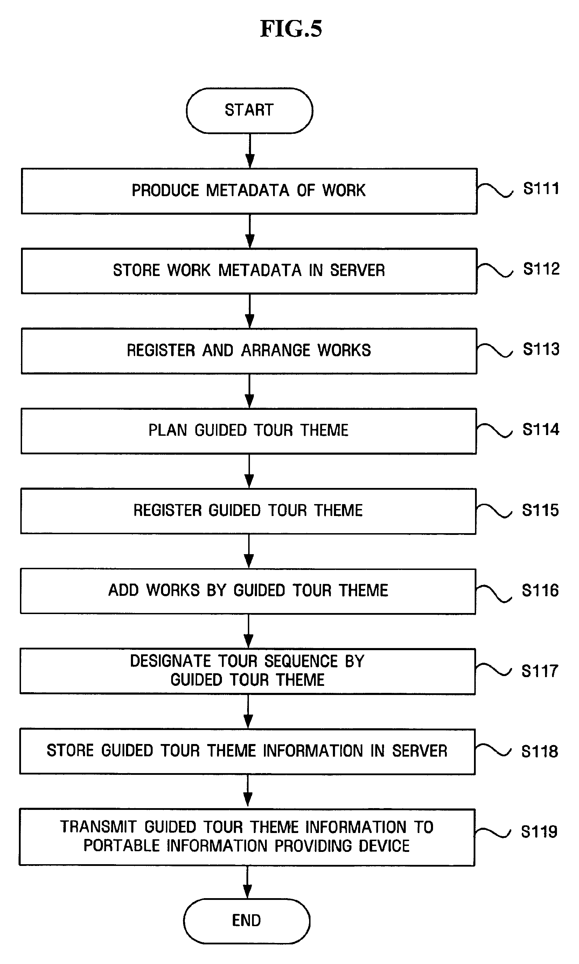

All the processes conducted in the system are illustrated in this figure. A guide theme is first registered (S110). The guide theme is information including paths along which the user moves in order to view exhibits or works of art having a common theme. Information regarding the works and positions of the works is registered based on analysis information on the paths in order for the user to more effectively view the works. A process of registering a guide theme will be described later with reference to Figure 5. Once the guide theme has been registered, the registered guide theme is stored in a portable information providing device. At this time, information regarding the works may also be stored in the portable information providing device.

A user leases a portable information providing device having information on guide themes therein (S120). At this time, personal information of the user may be set in the portable information providing device. The user selects a guide theme through the portable information providing device (S130). A curator at an art gallery or an exhibition hall may register a guide theme in operation S110, or a guide theme customized for each user based on the user's past tour history may be selected. Using information regarding works or an artist whose works the user desires to view, a new guide theme may be created. According to the selected guide theme, the user begins a guided tour (S140). Information about which exhibition room the user goes or about what the traveling path is can be obtained from the portable information providing device. The portable information providing device stores the user's tour history such as the viewed works, the time consumed while viewing works, and/or the path that the user took on the guided tour (S150). The user may not select a guided tour. Even if the user selects a guided tour, the path or tour time may vary according to the user's personality. When storing the tour history, the position information may be determined based on identification information on a sensed work or a sensed exhibition room. The user returns the portable information providing device after finishing the guided tour (S160). The history stored in the returned portable information providing device is transferred to a server and is analyzed (S170). The analyzed information is used in creating a new guide theme or modifying the guide theme, or registering a user's guide information. Processes conducted in each operation will be described in detail later.

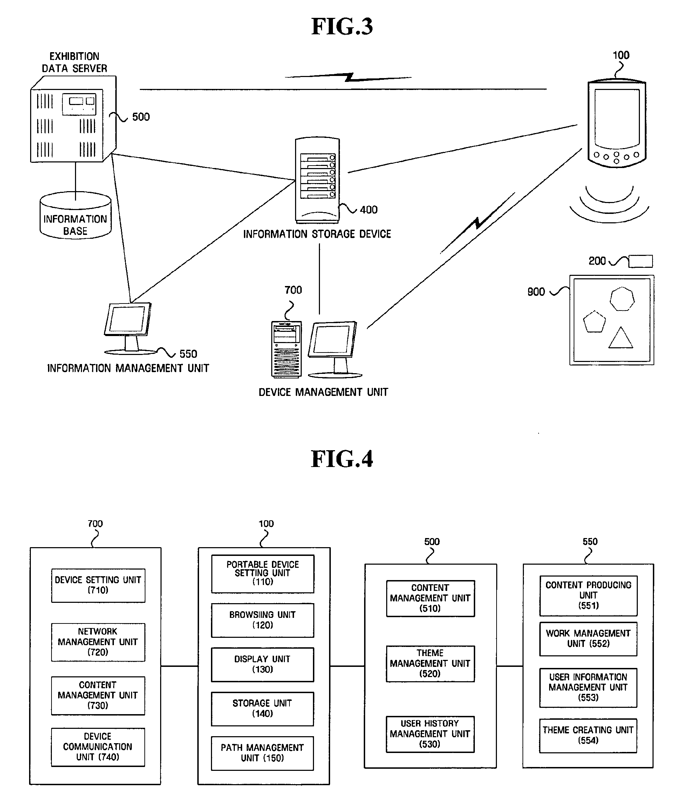

Figure 3 is a view illustrating a gallery guide system according to an exemplary embodiment of the present invention.

The term "part" or "unit," that is, "module" or "table," as used herein, means, but is not limited to, a software or hardware component, such as a Field Programmable Gate Array (FPGA) or an Application Specific Integrated Circuit (ASIC), which performs certain tasks. A module may advantageously be configured to reside on the addressable storage medium and configured to be executed on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. In addition, elements and modules may be implemented to be executed on one or more CPUs within a device or to reside on a secure multimedia card.

A gallery guide system according to an exemplary embodiment of the present invention comprises a portable information providing device 100, an information storage device 400, an exhibition data server 500, an information management unit 550, and a device management unit 700.

The portable information providing device 100 can transmit and receive data while it is being carried by a user, and can store information relating to guide themes and works on exhibition and provide it to the user in real time. The device 100 functions to sense identification information of the works in exhibition halls, museums or art galleries through infrared communication, wireless communication or RFID, and to output the stored information. An identification module 200 may be attached to a work 900 or installed near the work 900, and an identification module to identify an exhibition room is also present.

The information storage device 400 stores information on the exhibition data server 500 in the portable information providing device 100. The information storage device 400 may store information in a plurality of portable information providing devices 100 at the same time, and it also may charge them together.

The exhibition data server 500 stores and analyzes information relevant to exhibitions, art galleries, fairs, or others. When a new work or guide theme is registered, they are stored in the server. A user's tour history can also be stored through an information storage device 400 by connecting the portable information providing device 100 returned by the user to the information storage device 400, and it may be transmitted to the exhibition data server 500 or the device management device 700 in real time.

The information management unit 550 registers information on works or guide themes in the exhibition data server 500 and corrects it through a management program operated by the staff of a concerned art gallery or exhibition hall. In addition, the information management unit 550 may analyze the user's tour history. The information management unit 550 edits content information of works to be stored in the information storage device 100 and manages arrangement of the works. General information about the works, such as where to arrange the works to be displayed in an exhibition hall or an art gallery, the identification numbers of the works, and others is set, and a management function necessary for managing it is provided. Data to be stored in the information storage device 400 may be set. The information management unit 550 may be installed as an independent system connected to the exhibition data server 500 in order to communicate with it, or it may operate as a single application within the exhibition data server 500. When it is installed as an independent system, a multiplicity of users can input a large amount of data at the same time through the information management unit 550.

The device management unit 700 processes a job to lease the portable information providing device 100 to a user and to collect it from the user. The portable information providing device 100 is connected with the information storage device 400 and stores information of the server therein. Information as to whether the portable information providing device 100 has currently been leased or has been returned, or whether it has been charged and is ready for lease can be obtained through the information storage device 400. Accordingly, the device management unit 700 may review which portable information providing device 100 is available for lease, or which information is stored through the information storage device 400. The device management unit 700 manages lease and return of the portable information providing device 100, and may manage which portable information providing device 100 is allotted to which user. For this, an alarm message may be sent to the user who carries the portable information providing device within the exhibition hall, and an alarm message constructed with information customized to the user may be output on the portable information providing device 100.

As illustrated in Figure 3, since the portable information providing device 100 provides information while it is in motion, it can transmit and receive data wirelessly with the exhibition data server 500 and the device management unit 700. Communications with other systems may be made in a wired manner, but the present invention is not limited thereto. According to a configuration of the network, wireless communications with other systems are available. The portable information providing device 100 and the information storage device 400 may conduct storage of information and charging using a universal serial bus (USB). The portable information providing device 100 and the information storage device 400 are mainly combined in a wired manner in order to transmit data, and thus, an adequate communication method may be adopted. Use of USB is exemplary, and the present invention is not limited thereto.

Figure 4 is a view illustrating specific elements of the gallery guide system according to an exemplary embodiment of the present invention. The exhibition data server 500 comprises a content management unit 510, a theme management unit 520, and a user history management unit 530.

The content management unit 510 manages information about works on exhibition, positions of the works and data produced in such a format that it can be output on the portable information storage device 100. Information about an exhibition room or a display room is also stored. A search engine may be designed so that a curator can search for detailed information on the works, and information about the entire construction of the exhibition room can also be stored therein.

The theme management unit 520 creates and manages guide themes to provide guided tours to users. The guide themes may be decided according to the ages of the users, preferences of the works, tour number, art gallery, or tour history. A plurality of guide themes are stored in the theme management unit 520 and the portable information providing device 100. The guide themes make it easy to know which path the user should take, or where the works meeting the subject (theme) are exhibited. Thus, guide themes may also be created by the user.

The user history management unit 530 analyzes and manages the history data stored while the user is viewing works while carrying the portable information providing device 100. For example, information on which works the user viewed for a long period of time or along which path the user viewed the works is analyzed. This information is used to create or register an appropriate guide theme, or reference data to rearrange the works or change the structure of an exhibition room.

The information management unit 550 comprises a content producing unit 551, a work management unit 552, a user information management unit 553, and a theme creating unit 554. The content producing unit 551 produces content to indicate information of a work. The content is produced in HTML and XML format, which are appropriate for the portable information providing device. It includes a function of converting the content into a format to be automatically output using a template file when information is input.

The work management unit 552 provides information on each work, in connection with where the work is positioned, what identification information it has, and how frequent it is added to users' interest lists, and it manages the information. This information may be referenced when the content producing unit 551 produces content.

The user information management unit 553 analyzes guide information on users based on log information generated in the course of viewing. Based on the analysis result, tour mode may be recommended to the users, and it may be referenced when rearranging the works.

The theme creating unit 554 creates guide themes by referencing a blue print of an exhibition hall or an art gallery or in association with the works in the work management unit 552. The guide themes can be created considering the length of a tour path, the likelihood of user collisions, the management of traffic and others.

The portable information providing device 100 is carried by the user, who can obtain information about the works displayed in an exhibition hall or an art gallery. Portable digital devices such as a personal digital assistant (PDA), a hand-held personal computer (HPC), a cell phone can be the portable information providing device 100.

The portable device setting unit 110 receives identification information of a work through a sensor and information on the exhibition room where a user has currently stopped, and transfers the information to a browsing unit 120 and a display unit 130. The portable device setting unit 110 controls access to a wireless local area network (LAN), and when it is combined with an information storage device 400, it receives information on works and guide themes from a server 500 and stores them in a storage unit 140, and determines whether the information is synchronized. It also receives information on the user who is currently carrying the portable information providing device 100 and sets the language to be used, selection of automatic/manual mode, use of a guided tour service customized to the user. In addition, the frequency of accessing content, information on the content set (by the user) in the interest list, information on the exhibition hall(s) to which the spectator moved, which are acquired through the portable information providing device 100 may be stored in the path management unit 150. The path management 150 may occupy a region in the storage unit 140, or may have an independent storage space.

Information generated as the user moves is stored in the portable information providing device 100, and may be recorded in the exhibition data server 500 through the information storage device and managed through the device management unit 700.

The browsing unit 120 outputs the stored content, and processes a key/touch-pad input (by a user) The browsing unit 120 outputs the current position, a user's intended position, or the user's previous path through the display unit 130. Once the user selects a guide theme, the design of the tour, current position and any selection items to change the guide theme are displayed to the user through the display unit 130. In addition, the content corresponding to the identification of a work sensed by the portable information providing device 110 is output on the display unit 130.

The display unit 130 displays information output from the browsing unit 120. When the stored content is image or text information, it is output through a screen, and it is output through a speaker or a headphone when it is audio information such as voice and music. The traveling path according to the guide theme is visually output so that the user can easily move while carrying the portable information providing device. At this time, a guide theme menu previously produced and registered by the content producer to provide the user with the menu for the guide theme is displayed. The interest list and information on a list of visited exhibition rooms, which are stored in the storage unit 140, may be displayed as necessary.

The storage unit 140 stores information received through the information storage device 400. Information received through the information storage device 400 comprises a guide theme for exhibition, content of the works on exhibition and others. Changed information received through the device management unit 700, or synchronized content information are also stored. In addition, information received in real time through the device management unit 700 or data directly received from the exhibition data server are stored.

The path management unit 150 manages a path for a guide theme, which is selected by a user, in order to provide a guided tour service customized to each user. By matching the entire path of the guided tour selected with the actual path to be traveled by the user, information about the current position and a place to be moved to is managed. A user's tour history can also be stored. The current position is ascertained by referencing the work or the exhibition room sensed by the portable device setting unit 110 and the user's position in the guided tour can be calculated.

The portable information providing device 100 stores and uses the guide themes stored in the exhibition data server 500, but the user may create and use a theme. In addition, the user can directly modify a stored guide theme and view the works based on a new guide theme. For this, the path management unit 150 allows the user to create or modify the guide theme.

The device management unit 700 controls the current use status of the portable information providing device 100, and performs data-transmitting jobs such as transmitting an alarm message to the portable information providing device 100. It may also receive user log information through the portable information providing device 100. It sets user information, the language and the mode (automatic/manual). When the content stored in the exhibition data server 500 is modified, it conducts a job to transmit the modified content to the portable information providing device (synchronization), and it manages return and lease of the portable information providing device 100, and it also collects the log information.

The device setting unit 710 sets user information, the language and the mode (automatic/manual). Since the portable information providing device 100 stores information of the server as it is combined with the information storage device 400, information about whether the portable information providing device 100 is currently available leased, or whether it is charged can be ascertained through the information storage device 400. Accordingly, the device setting unit 710 conducts leasing management, remote control management, content synchronization, and log information setting through the information storage device 400. It also conducts the setting of device information so that the information storage device 400 can charge a plurality of portable information providing devices simultaneously and process the data.

The network management unit 720 sets and manages states of a network in order to communicate with the portable information providing device 100. It also manages the current position of the portable information providing device 100, and collects the relevant information and applies it in collecting use patterns or guide information.

The content management unit 730 temporarily stores content stored in the server and transmits it to the portable information providing device 100 so that modified content of a work or a modified program can be updated remotely.

The device communication unit 740 provides a function for exchanging information with the portable information providing device 100. It can also transmit and receive data with the portable information providing device 100 through transceiving modules installed in several places of an exhibition hall or an art gallery, and it can transmit real-time messages to the all users or some users. The content management unit 730 transmits modified content information through the device communication unit 740.

Figure 5 is a flow chart illustrating a process of creating a guide theme, which specifically shows (S110) of Figure 2, according to an exemplary embodiment of the present invention. To create a guide theme, metadata of a work is first stored. After registering information on a guide theme, the guide theme is created in association with the metadata of the work. First, information on the title of the work, the artist, the era, the year of and description of the work (hereinafter collectively referred to as "metadata" of a work) are produced (S111). The metadata serves as a criterion for searching or sorting works. The produced metadata is stored in the server (S112). Production and storage of the metadata of the work are designed to allow a content producer or a user to decide a theme for the guided tour and easily search for and select a concerned work. The work, work number and the number of concerned sensors are input and the work is arranged in a blueprint of the exhibition hall (S113). The aforementioned operations are to store a work.

Once registration of the work is completed, a content producer belonging to the museum or art gallery makes a plan for a separate guide theme at an event of the museum or art gallery or during a special period, to thereby produce a theme for a guided tour (S114). When planning a guide theme, the general mood of the registered works, the purpose of the exhibition, the traits of the users, and the tour time and period are considered. The planned guide theme is registered (S115). At this time, the title of the guide theme may be registered using a specific template of the exhibition service management program. To register works corresponding to the concerned guide theme, metadata of works in the server is searched and works may be added (S116). Information of the guide theme is stored in the exhibition data server (S118). The stored data is transmitted to the portable information providing device for a guided tour through the information storage device (S119).

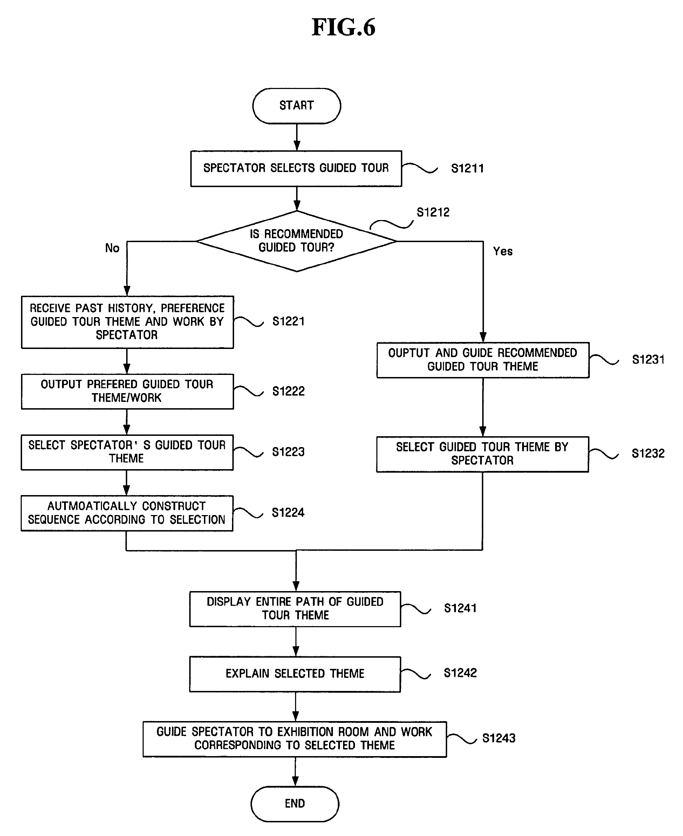

Figure 6 is a flow chart illustrating a process of selecting a guide theme, which shows operation S130 of Figure 2 in detail, according to an exemplary embodiment of the present invention. This figure shows selection (by a user) of a theme stored in the portable information providing device 100 after completing the operation shown in Figure 5. Roughly, there are two kinds of themes that the user can select: guide themes recommended by a museum or art gallery, and individual guide themes based on the past history of each user. The user selects a desired guide theme (S1211), and the portable information providing device 100 receives the user's past history and preferred guide themes or information on the works from the exhibition data server (S1221). At this time, personal information on the user may be set when the user leases the portable information providing device 100. The received information is output via the preferred guide theme and work to the user through the portable information providing device (S1222). The user may select the guide theme or the work that meets the user's preference (S1223). According to the selection by the user, the tour sequence is automatically formed, to thereby construct a guide theme (S1124). To automatically construct the tour sequence corresponding to a work for the guided tour (S1224), the number of the work included in the selected theme and the position information of each work are searched, thereby constructing position information that matches the blueprint of the museum or art gallery, and path information to indicate the entire path according to the guided tour of the selected theme is automatically constructed.

When the user selects recommended guide themes, the recommended guide theme(s) provided by the museum or art gallery is output to the user (S1231), and the user selects one of them (S1232).

The entire path of the guided tour instructs the user to move according to the guide theme selected or constructed in operations S1224 or S1232 (S1241). And detailed description of the selected theme is output through the portable information providing device (S1242). In addition, other exhibition rooms, where the user will move later based on the selected theme or works, are also displayed and the user can navigate on this basis (S1243).

The user may create an exclusive theme in operation S1212 (not shown in Figure 6). In this case, the user's preference by work or artist may be reflected, or a guide theme may be created based on the user's past tour history by product. A guide theme may also be created by selecting works not viewed by the user. The created guide theme is stored in the user's portable information providing device and is output to the user.

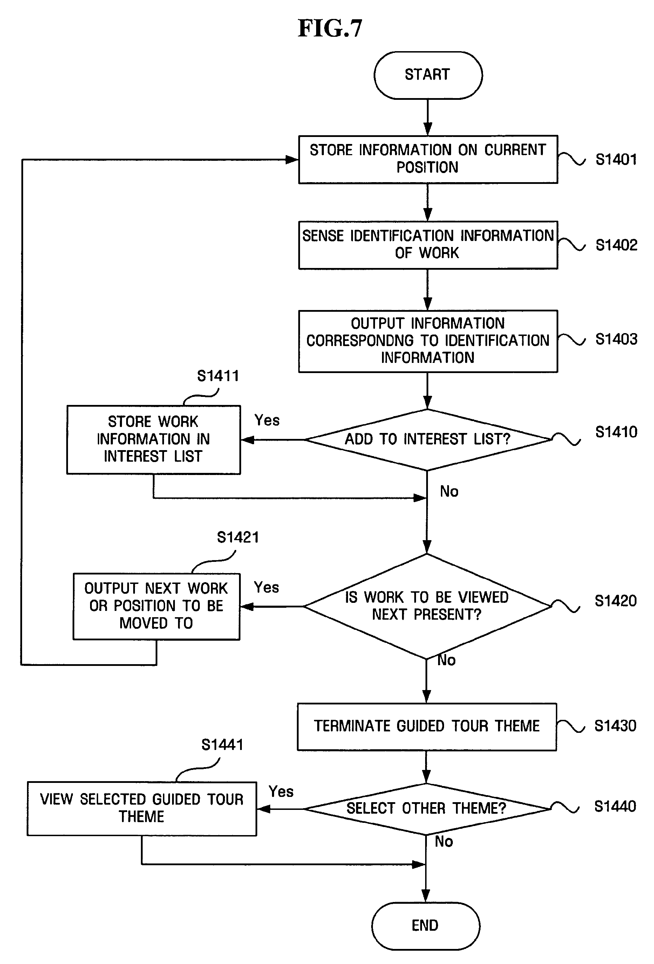

Figure 7 is a flow chart illustrating a process of viewing exhibits based on a guide theme according to an exemplary embodiment of the present invention. As described with reference to Figure 6, the user moves to a concerned exhibition room based on the guide theme displayed on the user's portable information providing device. At this time, the portable information providing device displays information about the work by identifying identification information of the work to be viewed using a wireless, infrared, or RFID method, thereby guiding the user to the work or the exhibition room.

The current position information is stored (S1401). When the portable information providing device senses identification information attached to the exhibition room or identification information of the work, the user's current position can be ascertained. Once the current position information is stored, it can be ascertained where the user is currently positioned along the path of the guide theme. Through this, the current position can be displayed to the user, or the direction to move in can be determined. Next, the identification number of the work is sensed in a wireless or infrared manner through an identification module attached to the work or mounted around the work. The user can manually and directly input information on the work, and when the user does so relevant or candidate works may be output so that the user can select any of them.

When two works are positioned closely to each other, information of both works may be displayed alternately and repeatedly by sensing the identification information through the identification modules thereof. However, this may obstruct the user who is viewing the work. Thus, a mode that information of the concerned work is output when the identification information of the work has been sensed more than n consecutive times may be employed. For example, when information on the work is output only when the identification information of the same work has been sensed more than three times, a work "B" is not output even if identification information of the work "B" adjacent to a work "A" is sensed after the portable information providing device is moved within a very narrow range while the user is viewing the work "A." When the identification information of the work "B" has been sensed three times within a predetermined time after moving to the work "B," information about the work "B" is output.

The portable information providing device outputs information about the work corresponding to the identification of the work (S1403). Information on the work is provided in the format of voice, text, images or moving images, which are stored in the exhibition data server. According to the output information, the user determines whether to add it to the user's interest list (S1410). When the user adds it to the interest list, the work information is stored in the interest list (S1411). When it is not added to the interest list, the portable information providing device 100 reviews whether a next work to be viewed is present (S1420). When the next work or exhibition room to be moved to is present on the path of the guide theme, path information to the next work is output (S1421). The next work or an exhibition room to be moved to can be displayed, in comparison with the position information of the identified work, on the path in operation S1403. When the user moves to the concerned position, the user views the work while repeating the operations beginning with operation S1401.

When no further work is to be viewed, this means that the tour based on the selected guide theme is finished. Accordingly, the guide theme is terminated (S1430), and the user reviews whether to select another guide theme. When another guide theme is not selected, the user may finish touring or the tour freely. However, when the user selects another guide theme, the user can select the guide theme through the operations shown in Figure 6, and start a new tour (S1441).

Once the tour is finished, the user's tour history is stored when the portable information providing device is returned.

Operations shown in Figure 7 may be applied when the user creates or selects a new theme while the user is viewing works. That is, the user can select it using a guide theme predetermined or previously created by the user while the user was on a guided tour. While using a different guide theme, the user may wish to view another work produced by a person "A" while the user is viewing a work made by person "A." At this time, the user can create a new guide theme for works made by person "A." Accordingly, prior to operation (S1401), the current position is ascertained, guide information regarding where the works of an artist that the user wishes to view are present based on the current position and where the user has to move may be suggested.

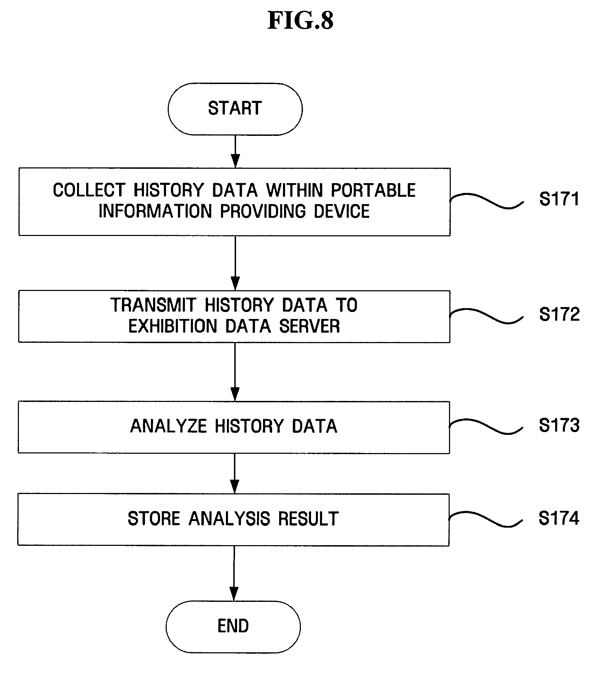

Figure 8 is a flow chart illustrating a process of storing and analyzing user information after finishing a tour, which shows operation S170 of Figure 2 in detail, according to an exemplary embodiment of the present invention. Once a user returns the portable information providing device, the portable information providing device is combined with the information storage device and is then electrically charged. When there is a new guide theme or modified data of a work, synchronization is performed. The user's guide information, which is stored in the portable information providing device, is also transmitted to the exhibition data server through the information storage device.

Once the user returns the portable information providing device, the user's history data (stored in the portable information providing device) is collected (S171), and transmitted to the exhibition data server (S172). The transmission is conducted through the information storage device. Also, when the portable information providing device is returned, the history data may be directly transmitted to the exhibition data server. The exhibition data server analyzes the history data (S173). The guide theme(s) selected by the user, the time taken to view each work, the works registered in the interest list, and the time consumed when moving between exhibition rooms are mainly analyzed. The user-created guide theme may be analyzed, and the analysis result is stored and a new guide theme may be created and then registered (S174).

As described above, work information and guide information customized to a user can be provided in real time when a user is viewing an exhibition hall or an art gallery.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for real-time provision of guide information and exhibit information, the method comprising:
storing guide information and work information;
transmitting the stored tour and work information to a portable information providing device (100);
sensing, by the portable information providing device (100), identification information of an exhibition room or a work on exhibition;
outputting, by the portable information providing device (100), information of the work produced based on the identification information of the work, or guide information produced based on the identification information of the exhibition room or the work;
recording a history relating to the works viewed or the tour time; and
analyzing and storing the recorded history.

2. The method of claim 1, wherein, in the sensing step, the portable information providing device (100) senses identification information of the exhibition room or the work wirelessly or by infrared.

3. The method of claim 1 or 2, wherein, in the outputting step, information on the sensed work or the guide information is output as at least one of a moving image, text and a still image.

4. The method of claim 1, 2 or 3, wherein, in the outputting step, information on at least one of the path to be traveled, the current position or a position to be moved to is output.

5. The method of any of claims 1 to 4, wherein the guide information includes a path to follow in order to view the work.

6. The method of any of claims 1 to 5 wherein the storing of guide and work information comprises modifying the stored guide information or creating new guide information.

7. A method for real-time provision of guide information and exhibit information, the method comprising:
receiving and storing work information and guide information;
setting information on a user and a selected guide;
sensing identification information of an exhibition room or a work;
providing information on the sensed work;
providing guide information relating to the current position produced by identification information on the sensed exhibition room or work;
recording the history about the viewed work or the tour time; and
transmitting the history.

8. The method of claim 7, wherein the sensing comprises sending identification information of the exhibition room or the work wirelessly or by infrared.

9. The method of claim 7 or 8, wherein, in the providing of the guide information, information on the work or the guide information is output as at least one of voice, a moving image, text and a still image.

10. The method of claim 7, 8 or 9, wherein, in the outputting, information on at least one of the path to be traveled, the current position and a position to be moved to is output.

11. The method of any of claims 8 to 10, wherein the guide information includes a path to be followed in order to view the works.

12. A gallery guide system for real-time provision of guide and exhibit information, the system comprising:
an exhibition data server (500) which stores work information and guide information;
a portable information providing device (100) which senses identification information of an exhibition room or a work, and outputs guide information produced by the sensed identification information of the exhibition room or the work, along with the current position; and
an information storage device (400) which stores the information stored in the exhibition data server (500) in the portable information providing device (100).

13. The system of claim 12, wherein the portable information providing device (100) senses identification information of the exhibition room or the work wirelessly or by infrared.

14. The system of claim 12 or 13, wherein the portable information providing device (100) outputs information on the work or the guide information as at least one of voice, a moving image, text and a still image.

15. The system of claim 12, 13 or 14, wherein the portable information providing device (100) provides information on at least one of the path to be traveled, the current position and a position to be moved to.

16. The system of any of claims 12 to 15, wherein the portable information providing device (100) records in the exhibition data server (500) a history concerning works viewed or tour time.

17. The system of any of claims 12 to 16, wherein the identification information of the work refers to wireless signals or infrared signals generated by identification modules attached to the work or present within a predetermined distance from the work.

18. A portable information providing device (100) for real-time provision of guide and exhibit information, the device comprising:
a storage unit (140) which stores work and guide information;
a portable device setting unit (110) which senses identification information of an exhibition room or an exhibit;
a browsing unit (120) which provides information on the sensed work and guide information relevant to the current position produced based on the sensed exhibition room or work;
a display unit (130) which outputs the information provided by the browsing unit (120); and
a path management unit (150) which records the viewed works or tour time.

19. The device of claim 18, wherein the browsing unit (120) sets information on recommended guides or information on customized guides.

20. The device of claim 18 or 19, wherein the portable device setting unit (110) senses identification information of the exhibition room or work wirelessly or by infrared.

21. The device of claim 18, 19 or 20, wherein the browsing unit (120) provides information on the sensed work or guide information as at least one of voice, a moving image, text and a still image.

22. The device of any of claims 18 to 21, wherein the browsing unit (120) provides information on at least one of the path to be traveled, the current position and a position to be moved to.

23. The device of any of claims 18 to 22, wherein the storage unit (140) stores information on viewed works in an interest list.

24. The device of any of claims 18 to 23, wherein the guide information stored in the storage unit (140) is created or modified, and stored.

25. The device of any of claims 18 to 24, wherein the guide information includes a path to be followed in order to view the works.
